# EUROPÄISCHE PATENTSCHRIFT

(11) **EP 3 635 651 B1**
(45) Veröffentlichungstag und Bekanntmachung des Hinweises auf die Patenterteilung: **07.04.2021**
(21) Anmeldenummer: 18724861.2
(22) Anmeldetag: 15.05.2018
(51) Int. Cl.: H02J 3/00, G06Q 10/06, G06Q 50/06

(54) **VERFAHREN ZUM BETREIBEN EINER VIELZAHL VON TECHNISCHEN EINHEITEN ALS VERBUND AN EINEM ELEKTRISCHEN VERTEILUNGSNETZ SOWIE STEUERVORRICHTUNG UND ELEKTRISCHE VORRICHTUNG**
METHOD FOR OPERATING A PLURALITY OF TECHNICAL UNITS AS A COMPOSITE ON AN ELECTRIC DISTRIBUTION NETWORK, CONTROLLER, AND ELECTRIC DEVICE
PROCÉDÉ POUR FAIRE FONCTIONNER UNE PLURALITÉ D'UNITÉS TECHNIQUES EN TANT QU'ENSEMBLE SUR UN RÉSEAU DE DISTRIBUTION ÉLECTRIQUE, AINSI QUE DISPOSITIF DE COMMANDE ET DISPOSITIF ÉLECTRIQUE

(30) Priorität: 09.06.2017 DE 102017209801
(43) Veröffentlichungstag der Anmeldung: 15.04.2020
(73) Patentinhaber: Bayerische Motoren Werke Aktiengesellschaft, 80809 München (DE)
(72) Erfinder: BERGER, Jens, 81545 München (DE)
(86) Internationale Anmeldenummer: PCT/EP2018/062478
(87) Internationale Veröffentlichungsnummer: WO 2018/224249

(56) Entgegenhaltungen:
- GB-A- 2 506 401

## Beschreibung

Die Erfindung betrifft ein Verfahren zum Betreiben einer Vielzahl von technischen Einheiten als Verbund an einem elektrischen Verteilungsnetz. In der elektrischen Energiewirtschaft wird eine technische Einheit auch als Asset bezeichnet. Durch den Vertrieb als Verbund wird insgesamt ein verbundweites Optimierungsziel für die technischen Einheiten erreicht. Zu der Erfindung gehören auch eine Steuervorrichtung zum zentralen Steuern der technischen Einheiten sowie eine elektrische Vorrichtung, die als eine technische Einheit in dem besagten Verbund betrieben werden kann.

An einem Verteilungsnetz können elektrische Verbraucher, elektrische Quellen und/oder elektrische Energiespeicher jeweils als eine technische Einheit über einen jeweiligen Netzanschluss angeschlossen sein. Jede technische Einheit kann somit elektrische Leistung mit dem Verteilungsnetz über den Netzanschluss austauschen. Mit Austauschen ist hierbei also sowohl die Entnahme von elektrischer Leistung als auch das Einspeisen von elektrischer Leistung gemeint. Mehrere solche technische Einheiten können in Bezug auf ihren Betrieb aufeinander abgestimmt oder koordiniert werden, wodurch sie im Sinne der Erfindung einen Verbund darstellen, indem sie ihren sogenannten Fahrplan, also den zeitlichen Verlauf eines geplanten Leistungsaustauschs, jeweils auf den Fahrplan der übrigen technischen Einheiten des Verbundes abstimmen. Insgesamt wirkt somit der Verbund in dem Verteilungsnetz wie eine große technische Einheit. Im Zusammenhang mit dem Betrieb von elektrischen Energiequellen als Verbund ist auch die Bezeichnung virtuelles Kraftwerk bekannt.

Zur Koordination mehrerer technischer Einheiten ist aus der US 2011/0015799 A1 eine zentrale Steuervorrichtung bekannt, die Betriebsdaten aus den technischen Einheiten eines Verbundes sammelt. Anschließend werden durch die zentrale Steuervorrichtung die einzelnen technischen Einheiten in Bezug auf die elektrische Leistung, die sie mit dem Verteilungsnetz austauschen sollen, gesteuert.

Allerdings gibt es technische Einheiten, wie beispielsweise für die Kraft-Wärme-Kopplung, die oftmals bedarfsgerecht betrieben werden müssen, also manuell aufgrund lokaler Bedarfe und/oder Prämissen gesteuert werden, um die technischen Randbedingungen der Anlage, beispielsweise die Betriebstemperatur, in einem vorbestimmten Intervall zu halten. Im Falle einer Quelle für erneuerbare Energie ist die Energieerzeugung wetterabhängig, d.h. hier kann durch eine Fernsteuerung nicht einfach eine vorgegebene Leistung entnommen werden. Falls zu viel Energie bereitsteht, muss diese ins Verteilungsnetz abgegeben werden, obwohl hierfür gemäß der zentralen Steuerung eventuell gar kein Bedarf besteht. Dies führt zu einer unnötigen Belastung des Verteilungsnetzes.

Die dezentrale, volatile Energieerzeugung nimmt aber weiter zu. Daher ist die Flexibilität von Energieerzeugung und Energienutzung wesentlich. Schwierig ist es hier, einen Verbund, also eine Vielzahl von technischen Einheiten, insgesamt in Bezug auf ein vorbestimmtes, verbundweites Optimierungsziel zu optimieren, während gleichzeitig jede einzelne technische Einheit nach lokalen, eigenen Optimierungszielen betrieben werden muss. Ein lokales Optimierungsziel kann zum Beispiel vorsehen, den Eigenverbrauch von erzeugter Energie zu maximieren, den Netzbezug von elektrischer Leistung zu minimieren, den Verschleiß zu minimieren oder die Netzeinspeisung zu maximieren, um Energie auf einem Energiemarkt verkaufen zu können. Dies kann einem verbundweiten Optimierungsziel widersprechen, beispielsweise die Kosten für den Gesamtbetrieb des Verbundes oder den CO2-Ausstoß zu minimieren oder den Anteil an erneuerbaren Energien zu maximieren.

Aus der US 2013/0345884 A1 ist ein Verfahren bekannt, um einen Verbund von technischen Einheiten zu steuern. Hierbei ist eine dezentrale Steuerung vorgesehen, zu der jede technische Einheit individuell beiträgt.

Eine verbundweite Optimierung für einen Verbund aus technischen Einheiten ist aus der US 2008/0046387 A1 bekannt. Hierbei ist es aber schwierig, ein ganzheitliches, verbundweites Optimierungsziel zu erreichen, das auch mit dem lokalen Optimierungsziel jeder technischen Einheit in Einklang steht. So muss bei der verbundweiten Optimierung auch auf Änderungen der Prämissen oder Randbedingungen jeder einzelnen technischen Einheit, wie beispielsweise deren Verfügbarkeit am Verteilungsnetz, reagiert werden können. Auch ein erlerntes Verhalten einer technischen Einheit, also eine Prognose für zukünftiges Verhalten, sollte berücksichtigt werden können.

Aus dem Dokument GB 2 506 401 A ist bekannt, dass der Bedarf an elektrischer Energie, den ein Verbund aus mehreren elektrischen Geräten gegenüber einem Stromnetz hat, optimiert werden kann, indem sowohl eine globale Kostenfunktion für den gesamten Verbund als auch individuelle Kostenfunktionen für die einzelnen elektrischen Geräte berücksichtigt werden. Ausgegangen wird hierbei von einem ersten globalen Optimierungsschritt, durch welche globale "innere Zustandsinformationen" entstehen, die dann an die einzelnen Geräte übermittelt werden, durch welche daraufhin ein jeweiliger lokaler Optimierungsschritt unter Berücksichtigung der globalen inneren Zustandsinformationen durchgeführt wird, was zu lokalen "inneren Zustandsinformationen" führt, die wiederum in die nächste Iteration des globalen Optimierungsschritts eingespeist werden. Hierdurch wird iterativ der gewünschte optimale Betriebspunkt für die einzelnen Geräte ermittelt.

Der Erfindung liegt die Aufgabe zugrunde, eine Vielzahl von technischen Einheiten dahingehend als Verbund an einem Verteilungsnetz zu betreiben, dass der Betrieb der einzelnen technischen Einheiten nach einem individuellen, einheitenspezifischen Optimierungsziel verlaufen kann und dennoch auch für den Verbund ein verbundweites Optimierungsziel erfüllt werden kann.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Durch die Erfindung ist ein Verfahren bereitgestellt, mittels welchem eine Vielzahl von technischen Einheiten als Verbund an einem elektrischen Verteilungsnetz betrieben werden kann. Die technischen Einheiten können hierzu in bekannter Weise über einen jeweiligen Netzanschluss über das Verteilungsnetz elektrisch gekoppelt sein, um elektrische Leistung auszutauschen. Eine andere Bezeichnung für ein solches Verteilungsnetz ist auch Energienetz. Zusätzlich können an dem Verteilungsnetz auch verbundexterne technische Einheiten angeschlossen sein, zum Beispiel zumindest ein Kraftwerk und/oder zumindest ein elektrischer Verbraucher.

Um die technischen Einheiten als Verbund zu betreiben, also insgesamt auf der Grundlage der technischen Einheiten ein verbundweites Optimierungsziel zu erfüllen, wird durch eine zentrale Steuervorrichtung zumindest ein Koordinierungszyklus durchgeführt. In einem solchen Koordinierungszyklus werden die folgenden Schritte durchgeführt. Aus jeder technischen Einheit werden jeweils Flexibilitätsdaten empfangen. Mittels der Flexibilitätsdaten gibt die jeweilige technische Einheit für zumindest ein Zeitintervall ein jeweiliges Leistungsintervall an, innerhalb welchem eine zwischen der Einheit und dem Verteilungsnetz ausgetauschte elektrische Leistung variieren darf oder voraussichtlich variieren wird. Es wird also die Flexibilität, welche die technische Einheit beim Leistungsaustausch hat oder anbieten kann, oder aber eine Prognose der voraussichtlichen Schwankung z.B. bei einem volatilen Energieerzeuger (Windkraftanlage oder Solaranlage) angegeben. Durch das Leistungsintervall wird ein Leistungsband beschrieben, das die minimale und die maximale Leistung angibt, zwischen denen der Leistungsaustausch in einem vorbestimmten zukünftigen Zeitintervall flexibel eingestellt werden kann. Die Flexibilität kann auch 0 betragen, dann ist für das Zeitintervall ein eindeutiger Verlauf angegeben. Bevorzugt ist aber das Leistungsintervall größer als 0.

Das Leistungsintervall ist ein Leistungsband, d.h. es gibt bei einer technischen Einheit mit Flexibilität mehrere mögliche Leistungswerte für einen gegebenen Zeitpunkt an. Bei einer technischen Einheit ohne Flexibilität gibt das Leistungsintervall dagegen einen jeweiligen konkreten Prognosewert für das zumindest eine Zeitintervall an. Kann die technische Einheit also nur einen konkreten Fahrplan durchführen, so wird dieser gemeldet. Das Leistungsintervall ist in diesem Fall also zu einem einzelnen Wert pro Rasterintervall degeneriert. Er wird aus Prognosewerten für die jeweiligen Rasterintervalle gebildet. Die Prognosewerte können in an sich bekannter Weise aus historischen Leistungsdaten der Einheit ermittelt werden.

Aus den jeweiligen Flexibilitätsdaten jeder Einheit ermittelt die zentrale Steuervorrichtung in Abhängigkeit von einem vorbestimmten, verbundweiten Optimierungsziel des Verbundes für jede Einheit zumindest eine jeweilige individuelle Anreizfunktion und stellt diese der jeweiligen Einheit bereit. Die Anreizfunktion gibt für das von der Einheit angegebene zumindest eine Zeitintervall einen jeweiligen zeitlichen Verlauf einer vorbestimmten Orientierungsgröße an, damit die Einheit den Leistungsaustausch planen kann. Das verbundweite Optimierungsziel kann eine Minimierung der aufgewendeten Energiekosten und/oder des CO2-Ausstoßes und/oder eine Maximierung des Anteils erneuerbarer Energien für den Verbund insgesamt, also gerechnet über alle Einheiten, vorsehen. Jede Anreizfunktion gibt für jeweils eine Orientierungsgröße, beispielsweise Energiekosten und/oder CO2-Ausstoß und/oder Anteil erneuerbarer Energien, einen zeitlichen Verlauf an, der sich aus dem Abgleich der Flexibilitätsdaten, d.h. der Zeitintervalle und der darin angegebenen Leistungsintervalle, ergibt. Somit kann die Anreizfunktion aus einer Angabe zu Kosten, CO2, Anteil erneuerbare Energien, Leistung jeweils über Zeit bestehen. Benötigt beispielsweise eine erste technische Einheit elektrische Leistung in einem gegebenen Zeitintervall und kann diese elektrische Leistung nur in einem Teilbereich des Zeitintervalls durch eine zweite technische Einheit des Verbundes bereitgestellt werden, so wird für diesen Teilbereich des Zeitintervalls die Anreizfunktionen für die beiden technischen Einheiten derart eingestellt, dass es für die erste technische Einheit günstiger ist, die Leistung in diesem Teilbereich des Zeitintervalls zu beziehen und für die zweite technische Einheit, die Leistung in diesem Teilbereich des Zeitintervalls bereitzustellen. Denn so kann die Leistungsübertragung verbundintern erfolgen, was z.B. die Bezugskosten für verbundexterne Energie insgesamt für den Verbund verringert.

Auf Grundlage der zumindest einen Anreizfunktion, die jede Einheit empfängt, kann diese Einheit dann den zeitlichen Verlauf ihres Leistungsaustauschs für die Zukunft planen. Die Anreizfunktion kann dabei aber als unverbindlich behandelt werden. Die zentrale Steuervorrichtung empfängt dann schließlich aus jeder Einheit als Antwort auf die zumindest eine individuelle Anreizfunktion einen jeweiligen Fahrplan aus der technischen Einheit. Der Fahrplan beschreibt für das von der Einheit angegebene zumindest eine Zeitintervall einen zeitlichen Verlauf des von ihr geplanten Leistungsaustauschs. Beispielsweise kann der zeitliche Verlauf in einem Zeitraster von 15 Minuten den jeweiligen Wert der auszutauschenden Leistung angeben. Eine andere Bezeichnung für einen solchen Fahrplan ist auch Leistungsplan. Die Planung des Fahrplans kann durch die technische Einheit gemäß einem lokalen Optimierungsziel der Einheit durchgeführt werden. Die Anreizfunktion ist also keine zwingende Vorgabe, sondern nur eine Randbedingung, welche die technische Einheit beim Planen des Fahrplans berücksichtigt, z.B. die Kosten, wobei aber auch das lokale Optimierungsziel beachtet wird, also beispielsweise die Minimierung des Verschleißes.

In der zentralen Steuervorrichtung liegen dann also aus den Einheiten die Fahrpläne für die zukünftigen Zeitintervalle vor. Aus den Fahrplänen aller Einheiten bildet dann die Steuervorrichtung einen Gesamtfahrplan für den Verbund. Der Gesamtfahrplan kann durch Bilanzieren der Fahrpläne gebildet werden und gibt an, welchen Leistungsaustausch der Verbund insgesamt mit zumindest einer verbundexternen technischen Einheit durchführen muss, um seine Leistungsbilanz auszugleichen. Der Leistungsaustausch mit der zumindest einen verbundexternen technischen Einheit erfolgt dann somit in der Weise, dass die Leistungsbilanz innerhalb des Verbundes ausgeglichen ist, also so viel Leistung zu jedem Zeitpunkt im Verbund zur Verfügung steht, wie sie gebraucht wird.

Durch die Erfindung ergibt sich der Vorteil, dass jede technische Einheit individuell selbstständig ihren Fahrplan planen kann und sich selbstständig schalten kann und somit auch lokale Betriebsprämissen oder Betriebsbedingungen jeder Einheit von ihr im Fahrplan beachtet werden können. Dennoch werden über die Anreizfunktionen die technischen Einheiten dahingehend koordiniert, dass sie ihren Fahrplan am verbundweiten Optimierungsziel orientieren.

Zu der Erfindung gehören auch Weiterbildungen, durch deren Merkmale sich zusätzliche Vorteile ergeben.

Ein Zeitintervall, das eine technische Einheit in ihren Flexibilitätsdaten angibt, kann beispielsweise in einem Bereich von 20 Minuten bis 24 Stunden liegen. Die besagte Anreizfunktion umfasst dagegen gemäß einer Weiterbildung der Erfindung den Verlauf der Orientierungsgröße (z.B. Kosten) für Rasterintervalle eines vorbestimmten Zeitrasters an, sodass sich eine Zeitreihe mit einem jeweiligen Wert der Orientierungsgröße pro Rasterintervall ergibt. Die Rasterintervalle können jeweils beispielsweise in einem Bereich von 5 Minuten bis 25 Minuten liegen, beispielsweise 15 Minuten betragen. Für jedes Rasterintervall liegt dann also ein Wert für die Orientierungsgröße vor.

An eine technische Einheit kann eine einzelne Anreizfunktion oder auch eine Kombination mehrerer Anreizfunktionen gesendet werden. Eine Weiterbildung sieht vor, dass die jeweilige Orientierungsgröße der zumindest einen Anreizfunktion eine der folgenden ist: monetäre Kosten, CO2-Verbrauch, ein Anteil an regenerativer Energie. Eine mögliche andere Anreizfunktion sieht vor, dass die Orientierungsgröße ein vorgeschlagener, konkreter oder eindeutiger Leistungswert für einen Leistungsplan oder Fahrplan ist. Mit anderen Worten kann die Steuervorrichtung als Anreizfunktion auch einen Fahrplan vorschlagen.

Auch das verbundweite Optimierungsziel, also das Optimierungsziel des Verbundes insgesamt, kann sich auf die besagten Orientierungsgrößen beziehen, also eine oder mehrere davon berücksichtigen. Das Optimierungsziel des Verbundes ist somit gemäß einer Weiterbildung bezogen auf die jeweilige Orientierungsgröße dahingehend eingestellt, dass es vorsieht, die Orientierungsgröße auf einen Wert innerhalb eines vorbestimmten Zielintervalls für den Verbund insgesamt, also gerechnet auf den Verbund, einzustellen. Mit anderen Worten sieht das Optimierungsziel des Verbundes bezogen auf die jeweilige Orientierungsgröße vor, dass die Orientierungsgröße verbundweit in ein vorbestimmtes Zielintervall eingestellt oder geführt wird. Das Zielintervall kann durch den minimalen Wert oder den maximalen Wert oder durch ein Einstellen der Orientierungsgröße auf einen Wert kleiner als ein Schwellenwert oder größer als ein Schwellenwert definiert sein. Dies hängt natürlich von der gewählten Orientierungsgröße ab. Monetäre Kosten und CO2 Verbrauch sind dabei kleiner als ein Schwellenwert einzustellen oder zu minimieren. Der Anteil an regenerativer Energie sieht dann natürlich eine Maximierung oder das Einstellen auf einen Wert größer als ein Schwellenwert vor.

Gemäß einer Weiterbildung enthalten die Flexibilitätsdaten zusätzlich eine Randbedingung, die angibt, welcher Energiebetrag insgesamt durch den Leistungsaustausch in dem zumindest einen Zeitintervall ausgetauscht werden muss. Es wird also die Gesamtenergie angegeben, die sich durch den Leistungsaustausch ergeben muss. So kann beispielsweise sichergestellt werden, dass eine technische Einheit den Energiebetrag am Ende des zumindest einen Zeitintervalls erhält oder liefert. Ein konkretes Beispiel für eine solche Randbedingung ist bei einem elektrisch antreibbaren Kraftfahrzeug gegeben, dass für eine vorbestimmte Anschlusszeitdauer mit dem Verteilungsnetz zum Aufladen verbunden wird, wobei der eigentliche Ladevorgang aber weniger Zeit benötigt als das Kraftfahrzeug insgesamt angeschlossen ist. Somit kann also über die Anschlusszeitdauer hinweg die Leistung variiert werden, solange als Randbedingung am Ende der Anschlusszeitdauer der Energiebetrag für das Aufladen der Batterie des Kraftfahrzeugs bezogen werden kann.

Die bisher beschriebenen Schritte ergeben einen einzelnen Koordinierungszyklus. Ein solcher Koordinierungszyklus kann bei der Initialisierung des Betriebs der Einheiten im Verbund durchgeführt werden. Zusätzlich oder alternativ dazu kann jeweils ein Koordinierungszyklus bei einer Veränderung der im Verbund betriebenen technischen Einheiten durchgeführt werden. Muss beispielsweise eine technische Einheit abgeschaltet werden, so kann durch einen Koordinierungszyklus erreicht werden, dass die übrigen technischen Einheiten ihre Fahrpläne anpassen, damit weiterhin das verbundweite Optimierungsziel erreicht werden kann. Es können sich aber auch zum Beispiel Veränderungen bei den Kosten für Energie ergeben, die der Verbund aus einer verbundexternen Quelle beziehen muss oder die der Verbund an einen verbundexternen Abnehmer abgeben soll. Allgemein kann also bei Veränderung der zumindest einen Orientierungsgröße, also beispielsweise der Kosten, ebenfalls ein Koordinierungszyklus durchgeführt werden. Hierdurch passen dann die Einheiten ihre Fahrpläne an die veränderte Orientierungsgröße an.

Bei der zumindest einen technischen Einheit kann das lokale Optimierungsziel in der besagten Weise die Berücksichtigung einer lokalen Vorgabe oder Prämisse umfassen. Eine solche lokale Vorgabe kann eine einzuhaltende Schaltzeit (Auszeit und/oder Einzeit) und/oder eine Verschleißminimierung und/oder einen maximal zulässigen Lärmpegel angeben. Das lokale Optimierungsziel kann zusätzlich oder alternativ eine der besagten Orientierungsgrößen betreffen. Indem ein solches lokales Optimierungsziel durch die technische Einheit selbst berücksichtigt wird, muss die zentrale Steuervorrichtung nicht für alle technischen Einheiten deren jeweilige lokalen Optimierungsziele kennen und berücksichtigen.

Im Zusammenhang mit der Erfindung kann unter einer technischen Einheit jede elektrische Vorrichtung verstanden werden, die mit dem Verteilungsnetz elektrisch verbunden werden kann. Somit kann die Vielzahl der technischen Einheiten zumindest einen elektrischen Verbraucher und/oder zumindest einen elektrischen Erzeuger und/oder zumindest einen elektrischen Speicher umfassen. Ein jeweiliges Beispiel für eine elektrische Einheit ist ein Kraftwerk, eine Solaranlage, eine Wärme-Kraft-Pumpe, ein elektrisch antreibbares Kraftfahrzeug, eine Ladestation für elektrische Kraftfahrzeuge, ein Gebäude, eine Industrieanlage, ein Haushalt, ein Stationärspeicher für elektrische Energie.

Zum Koordinieren der technischen Einheiten ist die zentrale Steuervorrichtung vorgesehen. Sie kann den Betrieb der Vielzahl von technischen Einheiten in einem Verbund an einem elektrischen Verteilungsnetz koordinieren. Dazu weist die erfindungsgemäße Steuervorrichtung eine Recheneinrichtung auf, die dazu eingerichtet ist, eine Ausführungsform des erfindungsgemäßen Verfahrens durchzuführen. Hierzu kann die Recheneinrichtung zumindest einen Mikroprozessor umfassen. Das Verfahren kann in Form eines Steuerprogramms für die Recheneinrichtung realisiert sein. Die zwischen der Steuervorrichtung und den technischen Einheiten zu übertragenden oder auszutauschenden Daten (Flexibilitätsdaten, Anreizfunktionen, Fahrpläne) können zum Beispiel über eine jeweilige Kommunikationsverbindung übertragen werden. Die Kommunikationsverbindung kann z.B. auf der Grundlage des Internets und/oder einer Mobilfunkverbindung bereitgestellt sein.

Zu der Erfindung gehört auch eine elektrische Vorrichtung, die als eine technische Einheit an einem elektrischen Verteilungsnetz betrieben werden kann. Als technische Einheit lässt sich die elektrische Vorrichtung somit mittels der erfindungsgemäßen Steuervorrichtung steuern. Die Vorrichtung ist dazu ausgestaltet, als elektrischer Verbraucher oder Erzeuger oder Speicher elektrische Leistung mit dem Verteilungsnetz auszutauschen. Die Vorrichtung ist des Weiteren dazu eingerichtet, an eine Ausführungsform der erfindungsgemäßen (zentralen) Steuervorrichtung Flexibilitätsdaten auszusenden, die in der beschriebenen Weise für zumindest ein Zeitintervall ein jeweiliges Leistungsintervall angeben, innerhalb welchem eine zwischen der Vorrichtung und dem Verteilungsnetz ausgetauschte elektrische Leistung variieren darf oder voraussichtlich variiert. Des Weiteren ist die Vorrichtung dazu eingerichtet, aus der Steuervorrichtung zumindest eine individuelle Anreizfunktion zu empfangen, die für das von der Vorrichtung angegebene zumindest eine Zeitintervall einen zeitlichen Verlauf einer vorbestimmten Orientierungsgröße (zum Beispiel monetäre Kosten, CO2-Ausstoß, Anteil erneuerbarer Energien, konkreter Fahrplan) angibt, damit die Vorrichtung einen Fahrplan, also einen Leistungsaustausch für das zumindest eine angegebene Zeitintervall, planen kann. Die Vorrichtung ist des Weiteren dazu eingerichtet, als Antwort auf die zumindest eine individuelle Anreizfunktion einen Fahrplan zu planen, für das von der Vorrichtung angegebene zumindest eine Zeitintervall gemäß einem lokalen Optimierungskriterium der Vorrichtung (zum Beispiel Kostenminimierung, Verschleißminimierung, Lärmminimierung, CO2-Ausstoßminimierung, Maximierung des Anteils erneuerbarer Energien) einen zeitlichen Verlauf des Leistungsaustauschs zu planen und als Fahrplan an die Steuervorrichtung auszusenden.

Zu der Erfindung gehören auch Weiterbildungen der elektrischen Vorrichtung, wie sie im Zusammenhang mit den Weiterbildungen des erfindungsgemäßen Verfahrens beschrieben sind. Die entsprechenden Weiterbildungen der elektrischen Vorrichtung sind deshalb hier nicht noch einmal beschrieben.

Somit bildet also die elektrische Vorrichtung das Gegenstück zu der beschriebenen zentralen Steuervorrichtung, damit durch die Steuervorrichtung und mehrere der elektrischen Vorrichtungen insgesamt das erfindungsgemäße Verfahren durchgeführt werden kann. Zu der Erfindung gehört deshalb auch eine Kombination aus der erfindungsgemäßen Steuervorrichtung und mehrerer elektrischer Vorrichtungen gemäß der Erfindung, wodurch sich ein erfindungsgemäßes System ergibt.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand eines bevorzugten Ausführungsbeispiels sowie unter Bezugnahme auf die Zeichnungen näher erläutert. Es zeigen:
- Fig. 1: eine schematische Darstellung einer Ausführungsform des erfindungsgemäßen Systems;
- Fig. 2: ein Diagramm zur Veranschaulichung von Flexibilitätsdaten;
- Fig. 3: ein Diagramm zur Veranschaulichung von Prognosedaten mit Prognosewerten;
- Fig. 4: ein Diagramm zur Veranschaulichung einer Anreizfunktion;
- Fig. 5: ein Diagramm zur Veranschaulichung der Bildung einer Anreizfunktion; und
- Fig. 6: ein Diagramm zur Veranschaulichung eines Fahrplans.

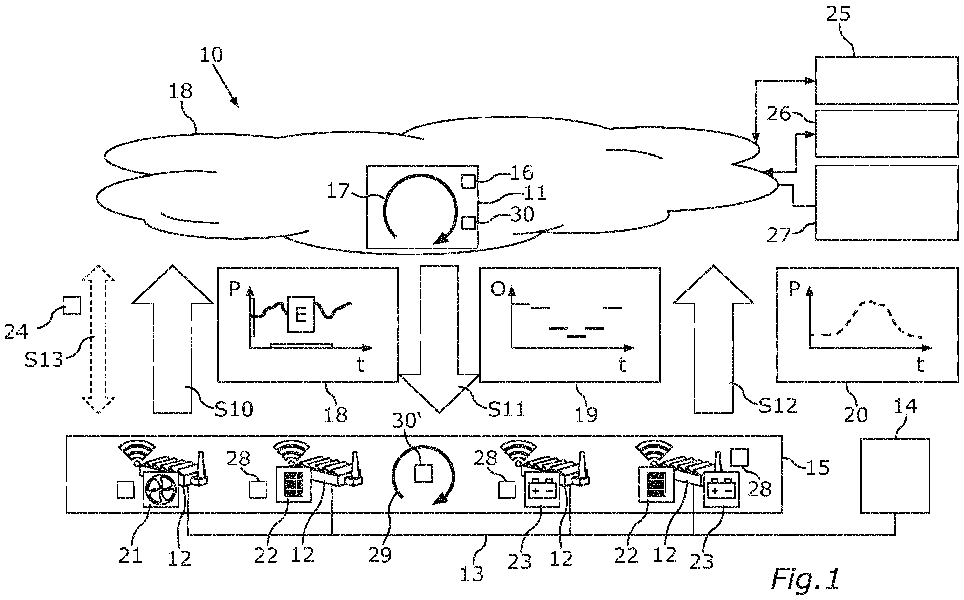

Fig. 1 zeigt ein System 10, dass eine zentrale Steuervorrichtung 11 und mehrere technische Einheiten 12 aufweisen kann. Die technischen Einheiten 12 können an ein elektrisches Verteilungsnetz 13 angeschlossen sein, an das zusätzlich weitere technische Einheiten 14 angeschlossen sein können die aber nicht zum System 10 gehören. Die zum System 10 gehörenden technischen Einheiten 12 werden als ein Verbund 15 gegenüber dem Verteilungsnetz 13 betrieben, d.h. es wird für den Verbund 15 ein Gesamtfahrplan 16 ermittelt, den der Verbund 15 gegenüber dem Verteilungsnetz 13 einhalten muss. Der Gesamtfahrplan 16 kann durch die Steuervorrichtung 11 in einem Koordinierungszyklus 17 ermittelt werden.

Die Servervorrichtung 11 kann hierzu zum Beispiel als ein Server des Internets 18 ausgestaltet sein und in an sich bekannter Weise über Kommunikationsverbindungen mit den einzelnen technischen Einheiten 12 kommunizieren. In dem Koordinierungszyklus 17 kann die Steuervorrichtung 11 in einem Schritt S10 aus jeder technischen Einheit 12 jeweils Flexibilitätsdaten 18 empfangen, anhand der Flexibilitätsdaten 18 dann für jede technische Einheit 12 eine jeweilige Anreizfunktion 19 erzeugen und diese in einem Schritt S11 an die jeweilige technische Einheit 12 aussenden. Jede technische Einheit 12 kann dann in Abhängigkeit von der Anreizfunktion 19 dann jeweils einen individuellen Fahrplan 20 erzeugen, der wiederum in einem Schritt S12 der Steuervorrichtung 11 mitgeteilt oder bereitgestellt werden kann.

Jede technische Einheit 12 kann beispielsweise einen elektrischen Leistungsverbrauch 21 oder die elektrische Leistungserzeugung 22 oder eine elektrische Zwischenspeicherung 23 von Energie oder auch eine Kombination aus zwei oder mehr der benannten Funktionen vorsehen, also zum Beispiel die Erzeugung 22 und die Zwischenspeicherung 23, wie in Fig. 1 für eine technische Einheit 12 dargestellt ist.

Die Steuervorrichtung 11 kann zusätzlich zyklisch oder zu vorbestimmten Zeitpunkten jeweilige Betriebszustandsdaten 24 unabhängig vom Koordinationszyklus 17 in einem Zustandsüberwachungsschritt S13 ermitteln. Hierdurch kann die Steuervorrichtung eine Abweichung einer technischen Einheit 12 von ihrem Fahrplan 20 erkennen und dann beispielsweise den Koordinationszyklus 17 neu starten.

Die Steuervorrichtung 11 kann des Weiteren zum Beispiel den Preis von elektrischer Leistung oder elektrischer Energie aus einem Energiemarkt 25 ermitteln oder Daten aus Aggregatoren 26 empfangen oder an diese liefern, die dann zum Beispiel eine Netzdienstleistung oder ein Energieprodukt auf Basis der elektrischen Leistung des Verbundes 15 anbieten kann, zum Beispiel das Bereitstellen von Primärregelleistung. Die Steuervorrichtung 11 kann auch Prognosen zum Wetter und/oder zum Energieverbrauch der zumindest einen verbundexternen technischen Einheit 14 und/oder zu Energiekosten aus einem Onlinedienst 27 empfangen oder für diesen bereitstellen.

Für jede technische Einheit 12 gelten für deren Betrieb lokale Prämissen 28, die aber die Steuervorrichtung 11 nicht kennen und kontrollieren braucht. Vielmehr existiert für jede technische Einheit 12 ein eigener Planungszyklus 29, in welchem die technische Einheit 12 jeweils ihren Fahrplan 20 unter Einhaltung oder Berücksichtigung ihrer lokalen Prämissen 28 plant. Eine lokale Prämisse 28 ist jeweils eine vorgegebene Bedingung oder ein Planungsziel für eine lokale Orientierungsgröße, wie beispielsweise die Verschleißminimierung, die Verbrauchsminimierung, die Lärmminimierung, das Einhalten einer Schaltzeit. Zusätzlich berücksichtigt jede technische Einheit 12 aber auch die für sie bereitgestellte Anreizfunkton 19, z.B. den Verlauf der Kosten für den Leistungsbezug der den Preis für gelieferte Leistung.

Die Steuervorrichtung 11 kann diese Planung des Fahrplans 20 jeder technischen Einheit 12 somit durch ihre Anreizfunktion 19 dahingehend beeinflussen, dass auch ein verbundweites, vorbestimmtes Optimierungsziel 30 des Verbundes 15 erfüllt wird.

Im Folgenden ist beschrieben, wie anhand der Flexibilitätsdaten 18 die Anreizfunktion 19 für jede technische Einheit gebildet werden kann.

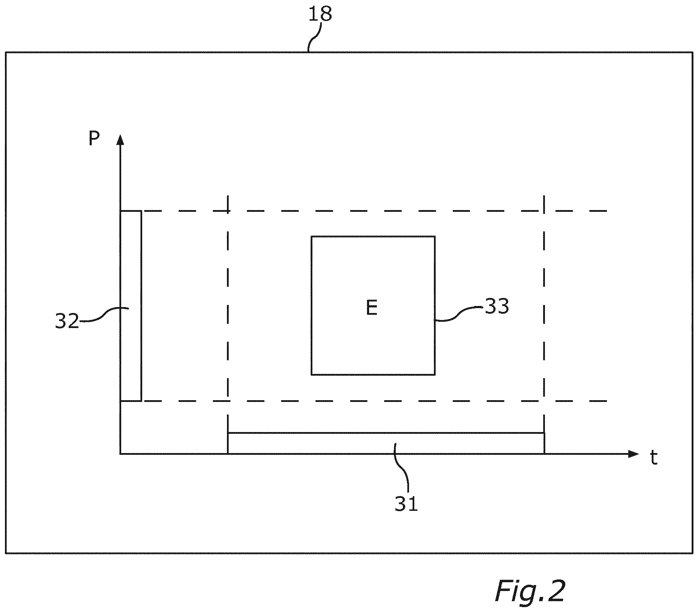

Fig. 2 veranschaulicht hierzu noch einmal ein Diagramm, welches Flexibilitätsdaten 18 repräsentiert. Über der Zeit t ist eine Leistung P für einen zukünftigen Leistungsaustausch zwischen einer technischen Einheit 12 und dem Verteilungsnetz 13 dargestellt. Falls die technische Einheit 12 Flexibilität beim Planen ihres Fahrplans 20 aufweist, kann sie für ein Zeitintervall 31 angeben, in welchem Leistungsintervall 32 die auszutauschende Leistung variieren darf oder voraussichtlich variiert. Dies kann beispielsweise davon abhängen, welche minimale und maximale Leistung die technische Einheit 12 auszutauschen imstande ist. Die Flexibilitätsdaten 18 können des Weiteren eine Randbedingung 33 für die insgesamt in Zeitintervall 31 auszutauschende elektrische Energie E angeben.

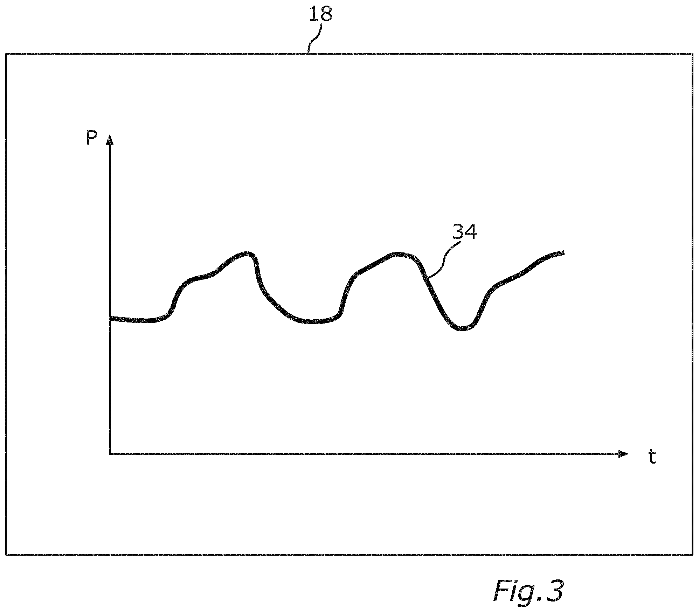

Fig. 3 zeigt, dass für den Fall, dass eine technische Einheit 12 keine Flexibilität aufweist, wie durch die Flexibilitätsdaten 18 eine Prognose 34 mit Prognosewerten der Leistung P über der Zeit t angegeben werden kann. Die Flexibilität kann zum Beispiel fehlen, wenn eine technische Einheit 12 über der Zeit t vorbestimmte Betriebspunkte einhalten oder einnehmen muss.

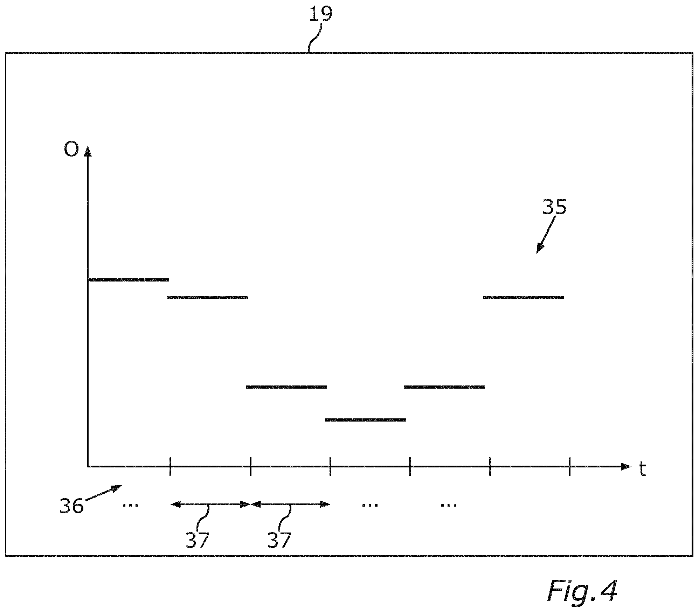

Fig. 4 veranschaulicht, wie die Anreizfunktion 19 über der Zeit t zu einer Orientierungsgröße O jeweils für unterschiedliche Zeitpunkte einen Wert definieren kann, sodass sich ein zeitlicher Verlauf 35 der Orientierungsgröße O ergibt. Es kann ein zeitliches Raster 36 aus Rasterintervallen 37 vorgesehen sein, um die Orientierungsgröße O über der Zeit t zu beschreiben. Ein Rasterintervall 37 kann zum Beispiel eine Dauer von 15 Minuten beschreiben. Die Orientierungsgröße O kann zum Beispiel die monetären Kosten oder die monetäre Vergütung für den Leistungsaustausch bezogen auf eine Leistungseinheit (zum Beispiel 1 KW) oder eine Energieeinheit (z.B. 1 KWh), der CO2-Ausstoß pro Leistungseinheit, der Anteil an regenerativer Energie oder auch ein konkreter Leistungswert P sein.

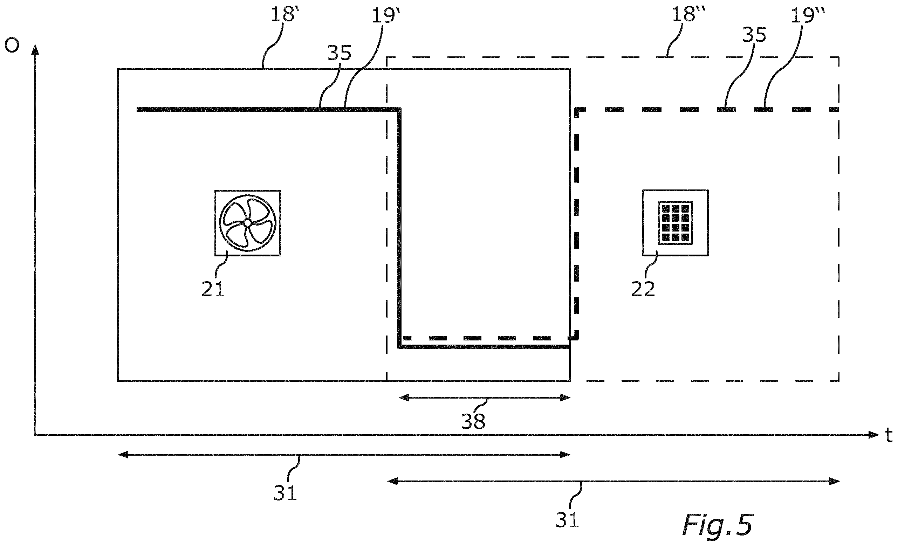

Fig. 5 veranschaulicht, wie Anreizfunktionen 19', 19" zweier unterschiedlicher technischer Einheiten 12 ermittelt und somit die technischen Einheiten 12 koordiniert werden können. Hierzu sind Flexibilitätsdaten 18', 18" der beiden technischen Einheiten 12 als Diagramm über der Zeit t dargestellt. Es ergibt sich ein Teilbereich 38, in welchem sich die beiden Zeitintervalle 31, die von den technischen Einheiten 12 angegeben worden sind, überscheiden. Es sei angenommen, dass das globale Optimierungsziel 30 besagt, dass der Anteil an elektrischer Leistung, der mit der verbundexternen, zumindest einen technischen Einheit 14 ausgetauscht wird, minimiert werden soll. Es kann des Weiteren angenommen werden, dass die Flexibilitätsdaten 18' Energieverbrauch 21 und die Flexibilitätsdaten 18" Energieerzeugung 22 angeben. Im Teilbereich 38 kann nun die Energieerzeugung 22 die den Energieverbrauch 21 innerhalb des Verbundes 15, also verbundintern kompensieren. Entsprechend wird der zeitliche Verlauf 35 der Anreizfunktionen 19', 19" dahingehend angepasst, dass sich ein niedriger Wert im Teilbereich 38 zum Beispiel für die Orientierungsgröße Kosten ergibt, während außerhalb des Teilbereich 38 der zeitliche Verlauf 35 für die Optimierungsgröße Kosten einen hohen Wert annimmt. Überträgt man nun den zeitlichen Verlauf 35 der jeweiligen Anreizfunktion 19' 19" an die jeweilige technische Einheit 12, so wird diese in ihrem Planungszyklus 29 die von ihr mit dem Verteilungsnetz 13 ausgetauschte Energie in den Teilbereich 38 konzentrieren.

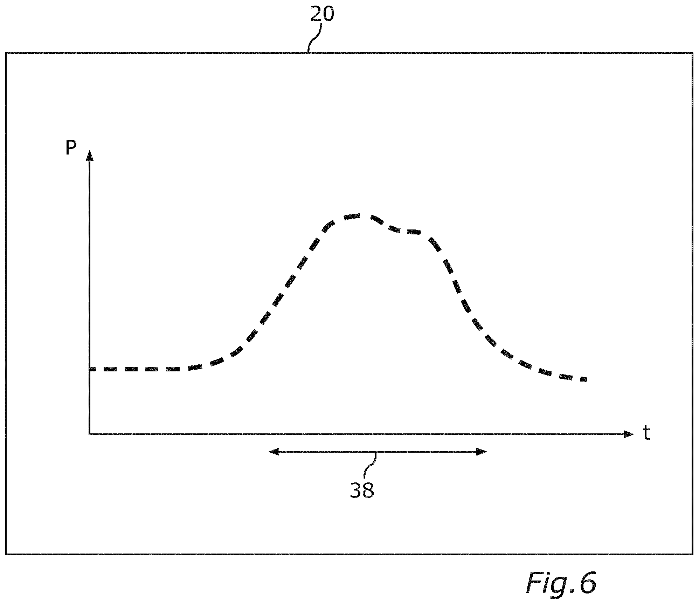

Das Ergebnis des Planungszyklus 29 ist, wie beispielhaft in Fig. 6 dargestellt, der Fahrplan 20 einer technischen Einheit 12, der über der Zeit t die geplante auszutauschende Leistung P darstellt, der dann in dem beschriebenen Beispiel für den Teilbereich 38 maximiert ist.

Die Steuervorrichtung 11 kann sämtliche Fahrpläne 20 kombinieren und hieraus den Gesamtfahrplan 16 durch Bilanzieren der Fahrpläne 20 erzeugen, sodass fehlende Leistung oder überschüssige Leistung über das Verteilungsnetz 13 mit der zumindest einen verbundexternen technischen Einheit 14 ausgetauscht werden kann. Die Einheit 14 kann zum Beispiel ein Kraftwerk oder eine Stadt oder einen Haushalt oder mehrere Haushalte umfassen. Die Kosten und/oder Vergütung für verbundexterne Energie oder Leistung kann die Steuervorrichtung 11 beispielsweise auf Grundlage von Daten der Energiemärkte 25 oder Energieaggregatoren 26 oder aus den Prognosen 27 ermitteln.

Damit die technischen Einheiten 12 jeweils dem Planungszyklus 29 durchführen und mit der Steuervorrichtung 11 kommunizieren können, kann jede technische Einheit 12 eine Steuereinheit beispielsweise auf der Grundlage der Technologie des Internet of Things aufweisen. Jede technische Einheit 12 kann mittels einer solchen Steuereinheit ihre lokalen Prämissen 28 bei der Optimierung des Betriebs berücksichtigen. Die Steuervorrichtung 11 dann liefert lediglich Anreize in Bezug auf zum Beispiel Kosten, CO2-Austausch, den Anteil erneuerbarer Energien in Form von Zielfunktions-Koeffizienten oder Randbedingungen, die als Anreizfunktion 18 auf den Optimierungsprozess oder die Optimierungsfunktion in den technischen Einheiten 12 wirken. Jede technische Einheit verarbeitet die Anregungsfunktion 18, optimiert ihren Fahrplan 20 unter Berücksichtigung der lokalen Prämissen 28 und sendet den finalen Fahrplan 20 zurück an die Steuervorrichtung 11.

Eine solche lokale Prämisse 28 ist also eine lokale Orientierungsgröße für die Planung des Leistungsaustauschs einer technischen Einheit 12. Der lokale Planungszyklus 29 erzeugt den Fahrplan 20 dann gemäß einem lokalen Optimierungsziel 30', wobei lokale Prämissen 28 verbindlich sein können, also durch den Fahrplan 20 einzuhalten sind.

Die Steuervorrichtung 11 kontrolliert oder überwacht dann die Einhaltung des lokalen Fahrplans 20 anhand der Betriebszustandsdaten 24 und registriert Abweichungen, um hierdurch auf unerwartete Veränderungen im Betriebsverhalten einer technischen Einheit 12 zum Beispiel mit der erneuten Durchführung eines Koordinierungszyklus 17 zu reagieren.

Somit kann also auf lokale Änderungen, zum Beispiel die Verfügbarkeit einer technischen Einheit 12, als auch auf globale Änderungen (zum Beispiel die Veränderung des Energiepreises am Energiemarkt 25) eingegangen werden. Bei Änderungen kann automatisiert in eine Koordinierungszyklus 17 neu verhandelt werden, ohne in den Betrieb der technischen Einheiten 12 mittels der Steuervorrichtung 11 eingreifen zu müssen.

Mehrere technische Einheiten 12 werden so zu einem Pool oder Verbund 15 optimiert und stellen somit z.B. ein virtuelles Kraftwerk in Bezug auf das Verteilungsnetz 13 dar, das einen verbindlichen Gesamtfahrplan 16 beispielsweise auf dem Energiemarkt 25 oder für einen Aggregator 26 anbieten kann oder als Netzdienstleister agieren kann.

Insgesamt zeigt das Beispiel, wie durch die Erfindung ein verteiltes Management für die energiewirtschaftliche Optimierung von technischen Einheiten oder Assets bereitgestellt werden kann.

### Bezugszeichenliste

- 10: System
- 11: Steuervorrichtung
- 12: Technische Einheit
- 13: Verteilungsnetz
- 14: Verbundexterne technische Einheit
- 15: Verbund
- 16: Gesamtfahrplan
- 17: Koordinierungszyklus
- 18: Flexibilitätsdaten
- 19: Anreizfunktion
- 20: Fahrplan
- 21: Energieverbrauch
- 22: Energieerzeugung
- 23: Energiespeicherung
- 24: Betriebszustandsdaten
- 25: Energiemarkt
- 26: Energieaggregator
- 27: Prognosen
- 28: Lokale Prämissen
- 29: Planungszyklus
- 30: Optimierungsziel des Verbundes
- 30': Lokales Optimierungsziel
- 31: Zeitintervall
- 32: Leistungsintervall
- 33: Randbedingung
- 34: Prognose
- 35: Zeitlicher Verlauf
- 36: Zeitraster
- 37: Rasterintervalle
- 38: Teilbereich
- E: Energie
- S10: Schritt
- S11: Schritt
- S12: Schritt
- S13: Schritt
- O: Orientierungsgröße
- P: Leistung

## Patentansprüche

1. Verfahren zum Betreiben einer Vielzahl von technischen Einheiten (12) als Verbund (15) an einem elektrischen Verteilungsnetz (13), bei dem durch eine zentrale Steuervorrichtung (11) in zumindest einem Koordinierungszyklus (17) jeweils:
- in Abhängigkeit von einem vorbestimmten Optimierungsziel (30) des Verbundes (15) für jede Einheit (15) zumindest eine jeweilige individuelle Anreizfunktion (19), die für zumindest ein von der Einheit (12) angegebenes Zeitintervall (31) einen zeitlichen Verlauf (35) einer vorbestimmten Orientierungsgröße (O) für eine Planung eines Leistungsaustauschs einer zwischen der Einheit (12) und dem Verteilungsnetz (13) ausgetauschten elektrischen Leistung (P) angibt, ermittelt und der jeweiligen Einheit (12) bereitgestellt wird,
- aus jeder Einheit (12) als Antwort auf die zumindest eine individuelle Anreizfunktion (19) ein jeweiliger Fahrplan (20) empfangen wird, der für das von der Einheit (20) angegebene zumindest eine Zeitintervall (31) einen zeitlichen Verlauf des gemäß einem lokalen Optimierungsziel (30') der Einheit (12) geplanten Leistungsaustauschs beschreibt, und
- aus den Fahrplänen (20) der Einheiten (12) ein Gesamtfahrplan (16) für den Verbund (15) gebildet wird, welcher einen geplanten Leistungsaustausch des Verbundes (15) mit zumindest einer verbundexternen technischen Einheit (14) angibt,
**dadurch gekennzeichnet, dass**
zum Ermitteln der Anreizfunktion (19): aus jeder technischen Einheit (12) jeweils Flexibilitätsdaten (18) empfangen werden, in welchen für das zumindest eine Zeitintervall (31) ein jeweiliges Leistungsintervall (32) angegeben ist, innerhalb welchem die zwischen der Einheit (12) und dem Verteilungsnetz (13) ausgetauschte elektrische Leistung (P) variieren darf oder voraussichtlich variieren wird,
wobei das Leistungsintervall (32) bei einer technischen Einheit (12) mit Flexibilität ein Leistungsband ist, das mehrere mögliche Leistungswerte für einen gegebenen Zeitpunkt angibt, und wobei das Leistungsintervall (32) bei einer technischen Einheit (12) ohne Flexibilität einen jeweiligen Prognosewert für das zumindest eine Zeitintervall (31) angibt,
und die Anreizfunktion (19) aus den jeweiligen Flexibilitätsdaten (18) jeder Einheit (12) ermittelt wird.

2. Verfahren nach Anspruch 1, wobei die Anreizfunktion (18) eine Zeitreihe mit Werten der Orientierungsgröße (18) für Rasterintervalle (37) eines vorbestimmten Zeitrasters (36) angibt.

3. Verfahren nach einem der vorhergehenden Ansprüche, wobei die jeweilige Orientierungsgröße (O) der zumindest einen Anreizfunktion (18) eine der folgenden ist: monetäre Kosten, CO2-Verbrauch, Anteil an regenerativer Energie, ein vorgeschlagener Leistungswert für einen Fahrplan (20).

4. Verfahren nach einem der vorhergehenden Ansprüche, wobei das Optimierungsziel (30) des Verbundes (15) vorsieht, dass die jeweilige Orientierungsgröße (O) verbundweit in einem vorbestimmten Zielintervall gehalten wird.

5. Verfahren nach einem der vorhergehenden Ansprüche, wobei die Flexibilitätsdaten (18) zusätzlich eine Randbedingung (33) enthalten, die angibt, welcher Energiebetrag (E) insgesamt durch den Leistungsaustausch in dem zumindest einen Zeitintervall (31) ausgetauscht werden muss.

6. Verfahren nach einem der vorhergehenden Ansprüche, wobei der zumindest eine Koordinierungszyklus (17) bei einer Initialisierung des Betriebs der Einheiten (12) im Verbund (15) und/oder bei einer Veränderung der im Verbund (15) betriebenen technischen Einheiten (12) und/oder bei einer Veränderung der zumindest einen Orientierungsgröße (O) durchgeführt wird.

7. Verfahren nach einem der vorhergehenden Ansprüche, wobei bei der zumindest einen technischen Einheit (12) das lokale Optimierungsziel (30') die Berücksichtigung einer lokalen Prämisse (28), insbesondere einer einzuhaltenden Schaltzeit und/oder einer Verschleißminimierung und/oder eines maximal zulässigen Lärmpegels, umfassen.

8. Verfahren nach einem der vorhergehenden Ansprüche, wobei die technischen Einheiten (12) umfassen: zumindest einen elektrischen Verbraucher und/oder zumindest einen elektrischen Erzeuger und/oder zumindest einen elektrischen Speicher.

9. Steuervorrichtung (11) zum Koordinieren eines Betriebs einer Vielzahl von technischen Einheiten (12) in einem Verbund (15) an einem elektrischen Verteilungsnetz (13), **dadurch gekennzeichnet, dass** die Steuervorrichtung (1) eine Recheneinrichtung aufweist, die dazu eingerichtet ist, ein Verfahren nach einem der vorhergehenden Ansprüche durchzuführen.

10. Elektrische Vorrichtung zum Betreiben als technische Einheit (12) an einem elektrischen Verteilungsnetz (13), wobei die Vorrichtung ausgestaltet ist, als elektrischer Verbraucher oder Erzeuger oder Energiespeicher elektrische Leistung mit dem Verteilungsnetz auszutauschen,
**dadurch gekennzeichnet, dass**
die Vorrichtung dazu eingerichtet ist,
- an eine Steuervorrichtung (11) gemäß Anspruch 9 Flexibilitätsdaten (18) auszusenden, mittels welchen für zumindest ein Zeitintervall (31) ein jeweiliges Leistungsintervall (32) angegeben wird, innerhalb welchem eine zwischen der Vorrichtung und dem Verteilungsnetz (13) ausgetauschte elektrische Leistung (P) variieren darf oder voraussichtlich variiert,
wobei das Leistungsintervall (32) bei einer technischen Einheit (12) mit Flexibilität ein Leistungsband ist, das mehrere mögliche Leistungswerte für einen gegebenen Zeitpunkt angibt, und wobei das Leistungsintervall (32) bei einer technischen Einheit (12) ohne Flexibilität einen jeweiligen Prognosewert für das zumindest eine Zeitintervall (31) angibt,
- aus der Steuervorrichtung (11) zumindest eine individuelle Anreizfunktion (19), die für das von der Vorrichtung angegebene zumindest eine Zeitintervall (31) einen zeitlichen Verlauf (35) einer vorbestimmten Orientierungsgröße (O) für eine Planung des Leistungsaustauschs angibt, zu empfangen,
- als Antwort auf die zumindest eine individuelle Anreizfunktion (19) an die Steuervorrichtung (11) einen Fahrplan (20) für das von der Vorrichtung angegebene zumindest eine Zeitintervall (31) auszusenden, der gemäß einem lokalen Optimierungsziel (30') der Vorrichtung geplant ist und einen zeitlichen Verlauf des Leistungsaustauschs für das zumindest eine Zeitintervall (31) angibt.

11. System (10) aus einer Steuervorrichtung (11) gemäß Anspruch 9 und einer Vielzahl von elektrischen Vorrichtungen gemäß Anspruch 10.

## Claims

1. Method for operating a multiplicity of technical units (12) as a pool (15) on an electrical distribution network (13), in which
a central control apparatus (11), in at least one coordination cycle (17), respectively:
- ascertains, on the basis of a predetermined optimization target (30) of the pool (15), for each unit (15), at least one respective individual stimulus function (19) that indicates, for at least one time interval (31) indicated by the unit (12), a time characteristic (35) of a predetermined orientation variable (O) for planning a power exchange of an electrical power (P) exchanged between the unit (12) and the distribution network (13), and provides said stimulus function to the respective unit (12),
- receives from each unit (12), in response to the at least one individual stimulus function (19), a respective schedule (20) describing, for the at least one time interval (31) indicated by the unit (20), a time characteristic of the power exchange planned in accordance with a local optimization target (30') of the unit (12), and
- forms from the schedules (20) of the units (12) an overall schedule (16) for the pool (15) that indicates a planned power exchange of the pool (15) with at least one pool-external technical unit (14),
**characterized in that**
to ascertain the stimulus function (19): there are received from each technical unit (12) respective flexibility data (18) containing an indication, for the at least one time interval (31), of a respective power range (32) within which the electrical power (P) exchanged between the unit (12) and the distribution network (13) is permitted to vary or will probably vary, wherein in the case of a technical unit (12) having flexibility the power range (32) is a power band indicating multiple possible power values for a given time, and wherein in the case of a technical unit (12) without flexibility the power range (32) indicates a respective forecast value for the at least one time interval (31),
and the stimulus function (19) is ascertained from the respective flexibility data (18) of each unit (12).

2. Method according to Claim 1, wherein the stimulus function (18) indicates a time series having values of the orientation variable (18) for increment intervals (37) of a predetermined time frame (36).

3. Method according to either of the preceding claims, wherein the respective orientation variable (O) of the at least one stimulus function (18) is one of the following: monetary costs, CO2 consumption, proportion of regenerative energy, a proposed power value for a schedule (20).

4. Method according to one of the preceding claims, wherein the optimization target (30) of the pool (15) provides for the respective orientation variable (O) to be kept within a predetermined target range on a pool-wide basis.

5. Method according to one of the preceding claims, wherein the flexibility data (18) additionally contain a constraint (33) indicating the total amount of energy (E) that needs to be exchanged by the power exchange in the at least one time interval (31).

6. Method according to one of the preceding claims, wherein the at least one coordination cycle (17) is performed when the operation of the units (12) in the pool (15) is initialized and/or when the technical units (12) operated in the pool (15) change and/or when the at least one orientation variable (O) changes.

7. Method according to one of the preceding claims, wherein in the case of the at least one technical unit (12), the local optimization target (30') encompasses taking into consideration a local premise (28), in particular a switching time to be observed and/or a minimization of wear and/or a maximum permissible noise level.

8. Method according to one of the preceding claims, wherein the technical units (12) encompass: at least one electrical load and/or at least one electrical generator and/or at least one electrical store.

9. Control apparatus (11) for coordinating operation of a multiplicity of technical units (12) in a pool (15) on an electrical distribution network (13), **characterized in that** the control apparatus (1) has a computing device configured to perform a method according to one of the preceding claims.

10. Electrical apparatus for operation as a technical unit (12) on an electrical distribution network (13), wherein the apparatus is designed to exchange electrical power with the distribution network, as an electrical load or generator or energy store,
**characterized in that**
the apparatus is configured
- to transmit to a control apparatus (11) according to Claim 9 flexibility data (18) that are used to indicate, for at least one time interval (31), a respective power range (32) within which an electrical power (P) exchanged between the apparatus and the distribution network (13) is permitted to vary or probably varies,
wherein in the case of a technical unit (12) having flexibility the power range (32) is a power band indicating multiple possible power values for a given time, and wherein in the case of a technical unit (12) without flexibility the power range (32) indicates a respective forecast value for the at least one time interval (31),
- to receive from the control apparatus (11) at least one individual stimulus function (19) indicating, for the at least one time interval (31) indicated by the apparatus, a time characteristic (35) of a predetermined orientation variable (O) for planning the power exchange,
- to respond to the at least one individual stimulus function (19) by transmitting to the control apparatus (11) a schedule (20) for the at least one time interval (31) indicated by the apparatus, which schedule is planned in accordance with a local optimization target (30') of the apparatus and indicates a time characteristic of the power exchange for the at least one time interval (31).

11. System (10) comprising a control apparatus (11) according to Claim 9 and a multiplicity of electrical apparatuses according to Claim 10.

## Revendications

1. Procédé permettant de faire fonctionner une pluralité d'unités techniques (12) en tant qu'ensemble (15) sur un réseau de distribution électrique (13), dans lequel un dispositif de commande central (11), respectivement dans au moins un cycle de coordination (17) :
- détermine pour chaque unité (15), en fonction d'un objectif d'optimisation prédéterminé (30) de l'ensemble (15), au moins une fonction de stimulation individuelle (19) respective qui spécifie pour au moins un intervalle de temps (31) spécifié par l'unité (12) une courbe dans le temps (35) d'une grandeur de référence prédéterminée (O) pour planifier un échange de puissance d'une puissance électrique (P) échangée entre l'unité (12) et le réseau de distribution (13), et la fournit à l'unité (12) respective,
- reçoit de chaque unité (12), en réponse à ladite au moins une fonction de stimulation individuelle (19), un programme respectif (20) qui décrit pour ledit au moins un intervalle de temps (31) spécifié par l'unité (20) une courbe dans le temps de l'échange de puissance planifié selon un objectif d'optimisation local (30') de l'unité (12), et
- établit à partir des programmes (20) des unités (12) un programme global (16) pour l'ensemble (15) qui spécifie un échange de puissance planifié de l'ensemble (15) avec au moins une unité technique (14) externe à l'ensemble,
**caractérisé en ce que** pour la détermination de la fonction de stimulation (19) : des données de flexibilité (18) sont reçues de chaque unité technique (12) respectivement, dans lesquelles, pour ledit au moins un intervalle de temps (31), un intervalle de puissance (32) respectif est spécifié dans lequel la puissance électrique (P) échangée entre l'unité (12) et le réseau de distribution (13) peut varier ou variera probablement,
dans lequel, pour une unité technique (12) dotée de flexibilité, l'intervalle de puissance (32) est une plage de puissance qui spécifie plusieurs valeurs de puissance possibles pour un instant donné, et dans lequel, pour une unité technique (12) sans flexibilité, l'intervalle de puissance (32) spécifie une valeur prévisionnelle respective pour ledit au moins un intervalle de temps (31),
et la fonction de stimulation (19) est déterminée à partir des données de flexibilité (18) respectives de chaque unité (12).

2. Procédé selon la revendication 1, dans lequel la fonction de stimulation (18) spécifie une série chronologique comprenant des valeurs de la grandeur de référence (18) pour des intervalles de grille (37) d'une grille de temps (36) prédéterminée.

3. Procédé selon l'une quelconque des revendications précédentes, dans lequel la grandeur de référence (O) respective de ladite au moins une fonction de stimulation (18) est l'une des suivantes : le coût monétaire, la consommation de CO₂, la proportion d'énergie renouvelable, une valeur de puissance proposée pour un programme (20).

4. Procédé selon l'une quelconque des revendications précédentes, dans lequel l'objectif d'optimisation (30) de l'ensemble (15) prévoit que la grandeur de référence (O) respective soit maintenue dans un intervalle de temps prédéterminé pour tout l'ensemble.

5. Procédé selon l'une quelconque des revendications précédentes, dans lequel les données de flexibilité (18) contiennent de plus une contrainte (33) qui spécifie quelle quantité d'énergie (E) doit être échangée au total par l'échange de puissance dans ledit au moins un intervalle de temps (31).

6. Procédé selon l'une quelconque des revendications précédentes, dans lequel ledit au moins un cycle de coordination (17) est effectué en cas d'initialisation du fonctionnement des unités (12) dans l'ensemble (15), et/ou en cas de modification des unités techniques (12) exploitées dans l'ensemble (15), et/ou en cas de modification de ladite au moins une grandeur de référence (O).

7. Procédé selon l'une quelconque des revendications précédentes, dans lequel, pour ladite au moins une unité technique (12), l'objectif d'optimisation local (30') comprend la prise en compte d'une prémisse locale (28), en particulier d'un temps de cycle à respecter et/ou d'une minimisation de l'usure et/ou d'un niveau de bruit admissible au maximum.

8. Procédé selon l'une quelconque des revendications précédentes, dans lequel les unités techniques (12) comprennent : au moins un consommateur électrique et/ou au moins un générateur électrique et/ou au moins un accumulateur électrique.

9. Dispositif de commande (11) permettant de coordonner le fonctionnement d'une pluralité d'unités techniques (12) dans un ensemble (15) sur un réseau de distribution électrique (13), **caractérisé en ce que** le dispositif de commande (1) présente un dispositif de calcul qui est aménagé pour effectuer un procédé selon l'une quelconque des revendications précédentes.

10. Dispositif électrique destiné à fonctionner comme une unité technique (12) sur un réseau de distribution électrique (13), le dispositif étant configuré pour échanger de la puissance électrique avec le réseau de distributeur en tant que consommateur électrique ou générateur électrique ou accumulateur d'énergie,
**caractérisé en ce que** le dispositif est aménagé
- pour envoyer à un dispositif de commande (11) selon la revendication 9, des données de flexibilité (18) au moyen desquelles pour au moins un intervalle de temps (31), un intervalle de puissance (32) respectif est spécifié dans lequel une puissance électrique (P) échangée entre le dispositif et le réseau de distribution (13) peut varier ou variera probablement,
dans lequel, pour une unité technique (12) dotée de flexibilité, l'intervalle de puissance (32) est une plage de puissance qui spécifie plusieurs valeurs de puissance possibles pour un instant donné, et dans lequel, pour une unité technique (12) sans flexibilité, l'intervalle de puissance (32) spécifie une valeur prévisionnelle respective pour ledit au moins un intervalle de temps (31),
- pour recevoir du dispositif de commande (11) au moins une fonction de stimulation individuelle (19) qui spécifie pour ledit au moins un intervalle de temps (31) spécifié par le dispositif une courbe dans le temps (35) d'une grandeur de référence (O) pour planifier l'échange de puissance,
- pour envoyer au dispositif de commande (11), en réponse à ladite au moins une fonction de stimulation individuelle (19), un programme (20) pour ledit au moins un intervalle de temps (31) spécifié par le dispositif qui est planifié selon un objectif d'optimisation local (30') du dispositif et une courbe dans le temps de l'échange de puissance pour ledit au moins un intervalle de temps (31).

11. Système (10) composé d'un dispositif de commande (11) selon la revendication 9 et d'une pluralité de dispositifs électriques selon la revendication 10.
